# EUROPÄISCHE PATENTSCHRIFT

(11) **EP 2 697 057 B1**
(45) Veröffentlichungstag und Bekanntmachung des Hinweises auf die Patenterteilung: **24.01.2018**
(21) Anmeldenummer: 12703313.2
(22) Anmeldetag: 10.02.2012
(51) Int. Cl.: B32B 17/10, E06B 3/67, F21V 33/00, G02B 6/00, F21V 8/00

(54) **BELEUCHTETE FASSADENANORDNUNG**
ILLUMINATED FAçADE STRUCTURE
STRUCTURE DE FAçADE ÉCLAIRÉE

(30) Priorität: 11.04.2011 EP 11161828
(43) Veröffentlichungstag der Anmeldung: 19.02.2014
(73) Patentinhaber: Saint-Gobain Glass France, 92400 Courbevoie (FR)
(72) Erfinder: MÜLLER, Marco, 52525 Waldfeucht (DE); MESSERE, Rino, B-4577 Modave (BE)
(74) Vertreter: Gebauer, Dieter Edmund
(86) Internationale Anmeldenummer: PCT/EP2012/052256
(87) Internationale Veröffentlichungsnummer: WO 2012/139787

(56) Entgegenhaltungen:
- WO-A1-02/052192
- WO-A1-2006/065049
- WO-A1-2007/077099
- WO-A1-2011/026728
- DE-A1-102008 009 774
- DE-U1- 29 706 568

## Beschreibung

Die Erfindung betrifft eine aus einer beleuchteten Dreifachverglasung aufgebaute Fassade.

Beleuchte Scheibenanordnungen beinhalten Scheiben und am Rand der Scheiben direkt angebrachte Leuchtmittel. Auf der Scheibenoberfläche aufgebrachte Reflexionselemente ermöglichen die homogene Beleuchtung der Scheibenfläche. So lassen sich Innenräume aber auch Gebäudeaußenfassaden sehr gleichmäßig beleuchten. Beleuchtete Scheibenanordnungen finden sich in einer Vielzahl von Anwendungsbereichen innerhalb und außerhalb von Gebäuden und Fahrzeugen.

Im Gegensatz zu einer punktförmigen Lichtquelle, wie einer Stehlampe oder Deckenlampe, lässt sich durch eine beleuchtete Scheibenanordnung ein sehr gleichmäßiges, flächiges, ambientes Licht erzeugen. In Abhängigkeit von der verwendeten Leuchtquelle und der Ansteuerelektronik lassen sich auch verschiedene Lichteffekte realisieren. Bei der Verwendung von farbigen LEDs lassen sich insbesondere verschiedene Farbeffekte kombinieren. So lassen sich bewegende Lichteffekte durch die gezielte Ansteuerung und Löschung einzelner LEDs erzeugen. Für den Betrachter scheint sich dabei das Licht in Farbwellen auszubreiten. Überlagern sich dabei mehrere Farbwellen, so ergeben sich weitere Effekte wie eine Farbmarmorierung, der sogenannte Moire-Effekt. Diese Licht- und Farbeffekte lassen sich auch für Werbeflächen oder zur Erzeugung künstlerischer und architektonischer Effekte nutzen.

Für eine Abstrahlung des Lichtes aus der Scheibe sind auf der Scheibe angebrachte Lichtreflektoren notwendig. Dazu kann die Scheibe bedruckt oder mit entsprechenden Einritzungen versehen werden. Da das Licht der LEDs seitlich eingekoppelt wird, geht oft ein hoher Anteil des eingestrahlten Lichts verloren. Bei der Verwendung in Doppel- und Dreifachverglasungen muss die Anbringung der Lichtreflektoren berücksichtigt werden, was nicht unwesentlich die Kosten des Verfahrens erhöht. Zudem beeinflusst die Art der Verglasung ganz wesentlich die von der Scheibe abgestrahlte Lichtmenge.

DE 295 10 238 U1 offenbart ein Fenster mit im Randbereich angebrachten Lichteinstrahlmitteln oder Lichtleitern. Auf dem Fenster angebrachte Reflektoren, Lichtablenkmittel, ermöglichen ein Abstrahlen des ins Fenster eingekoppelten Lichts. Als mögliche Lichtquellen kommen Glühlampen, Leuchtstoffröhren oder LEDs in Frage.

DE 198 52 593 A1 offenbart eine Flächenleuchte mit einer transparenten Verglasung. Bei ausgeschalteter Lichtquelle ist die Scheibe transparent. Wird die Lichtquelle eingeschaltet, so funktioniert die Verglasung als Flächenleuchte.

DE 102 24 421 A1 offenbart eine Lichtwand mit Lampen, die hinter einem Computerarbeitsplatz angeordnet ist. Die Lichtwand besteht aus einer transparenten Glas- oder Kunststoffscheibe, die bevorzugt über LEDs beleuchtet wird. Die Helligkeit und die Farbanteile können über eine Steuerungseinheit geregelt werden. Die Steuerungseinheit kann direkt mit dem PC des Computerarbeitsplatzes verbunden sein und die Helligkeit des Arbeitsplatzes in Abhängigkeit von der Helligkeit des Monitors regeln.

EP 1 379 742 B1 offenbart ein beleuchtetes urbanes Möbel mit Fenstern in einer Rahmenkonstruktion. Die Leuchtmittel sind an der Stirnseite der Fenster angeordnet und strahlen das einfallende Licht senkrecht nach außen ab. Eine ähnliche Anordnung findet sich auch in der EP 1 106 915 A1.

EP 1 346 178 B1 offenbart ein sandwichartiges Plattenelement. Die beiden Platten sind weitgehend lichtdurchlässig. Im Plattenzwischenraum oder an den Platten sind Solarzellenelemente angebracht. Eine Lichtquelle ist stirnseitig an mindestens einer Platte angeordnet und ermöglicht eine zusätzliche Beleuchtung.

DE 10 2005 061 855 A1 offenbart ein Glaselement als Teil einer Fassade mit lang nachleuchtendem Effekt. Das Langnachleuchtelement umfasst ein lang nachleuchtendes Pigment in einer Matrix.

DE 10 2005 036 869 A1 offenbart eine mehrschichtige Verbundstruktur zur Verkleidung der Innen- oder Außenseite von Gebäuden- oder Gebäudeteilen. Die Verbundstruktur umfasst mindestens eine lichtdurchlässige starre Schicht, mehrere Lichtleitfaser und ein oder mehrere Anschlüsse zum Verbinden der Lichtleitfasern mit einer Lichtquelle.

US 6,185,883 B1 offenbart ein Fenster mit dekorativen Schmuckelementen. Der Fensterrahmen umfasst eine Dreifachisolierverglasung mit dekorativen Elementen in der mittleren Scheibe.

Die internationale Patentanmeldung WO 2011/026728 A1 zeigt eine Doppelverglasung mit einem seitlich angekoppelten LED-Gehäuse.

Die internationale Patentanmeldung WO 2007/077099 A1 zeigt die Einkopplung von Licht in eine Einzelscheibe.

Die internationale Patentanmeldung WO 2002/052192 A1 zeigt beleuchtete Fassadenelemente für eine Häuserwand.

Das deutsche Gebrauchsmuster DE 29706568 U1 zeigt ein Befestigungselement für zwei Doppelverglasungen.

Für eine Abstrahlung des Lichtes aus der Scheibe sind auf der Scheibe angebrachte Lichtreflektoren notwendig. Dazu kann die Scheibe mit einer hellen keramischen Schicht bedruckt oder mit entsprechenden Einritzungen versehen werden. Da das Licht der LEDs seitlich eingekoppelt wird, geht oft ein hoher Anteil des eingestrahlten Lichts verloren. Bei der Verwendung in Dreifachverglasungen muss daher die Anbringung der Lichtreflektoren und vor allem der Leuchtquelle berücksichtigt werden. Dreifachverglasungen, insbesondere in Fassaden, sind in der Regel für Wartungsarbeiten nur schwer zugänglich. Insbesondere die Lichtleisten sind häufig ein integraler Teil der Verglasung, welcher schwer zugänglich oder zu erreichen ist.

Die Aufgabe der Erfindung liegt darin, eine Verglasung bereitzustellen, an der eine LED-Leiste montiert und gewartet werden kann, ohne dass Umbaumaßnahmen der Verglasung erforderlich sind. Die Verglasung soll zudem eine möglichst große Lichtmenge von der Scheibenoberfläche abstrahlen. Zudem müssen die verbauten elektronischen Lichtquellen und deren Zuleitungen sehr langlebig und robust ausgeführt werden. Dazu sollten sie eine Schutzart nach DIN EN 60529 von mindestens IP 64, bevorzugt IP67, aufweisen.

Eine erfindungsgemäße beleuchtete Fassadenanordnung geht aus dem unabhängigen Anspruch hervor.

Die beleuchtete Isolierverglasung umfasst mindestens eine Verbundglasscheibe und eine untere (Außen-) Scheibe. Ein umlaufendes (rahmenartiges) Verbindungselement zwischen der Verbundglasscheibe und der unteren Scheibe bildet den Grundaufbau der Isolierverglasung. Das Verbindungselement kann optional auch in Form von zwei (verbindbaren) Verbindungselementen ausgeführt sein. Die Scheiben enthalten Materialien wie Glas und/oder transparente Polymere. Die Scheiben weisen bevorzugt eine optische Transparenz von > 85 % auf. Grundsätzlich sind verschiedene Geometrien der Scheiben möglich, beispielsweise rechteckige, trapezförmige und abgerundete Geometrien. An der Seitenkante der unteren Scheibe ist ein LED-Gehäuse befestigt. Das LED-Gehäuse enthält mindestens eine LED, eine an der LED befestigte LED-Leiterplatte (PCB, printed circuit board) und einen an der LED-Leiterplatte befestigten elektrischen Anschluss. Die LEDs umfassen bevorzugt LEDs (Light Emitting Diodes) und/oder OLEDs (Organic Light Emitting Diodes). Die LED-Leiterplatte umfasst handelsübliche Leiterplatten und/oder Platinen. Diese bestehen aus elektrisch isolierenden Materialien, auf denen elektrische Verbindungen angebracht sind. Beispiele für isolierende Materialien sind nicht leitfähige Polymere wie mit Epoxydharz getränkte Glasfaser, Teflon, Keramik und/oder Polyesterfolie. Die elektrischen Verbindungen, beispielsweise Leitungsdrähte, enthalten bevorzugt Kupfer, Eisen, Zinn, Nickel, Gold, Silber und/oder Legierungen davon. Auf den LED-Leiterplatten werden die LEDs befestigt und über die elektrischen Verbindungen kontaktiert. Der elektrische Anschluss stellt die Verbindung zur Stromquelle her. Bevorzugt ist zwischen dem elektrischen Anschluss und der Stromquelle noch eine Steuervorrichtung angeordnet. Diese Steuervorrichtung ermöglicht die gezielte Beleuchtung einzelner LEDs. Durch die Anordnung verschiedenfarbiger LEDs auf der LED-Leiterplatte lassen sich farbige Lichteffekte erzeugen. Die gesamte Anordnung der Komponenten aus LED, LED-Leiterplatte und elektrischem Anschluss befindet sich in einer Ummantelung. Diese Ummantelung kann als flexibles oder starres Gehäuse ausgebildet sein.

Das LED-Gehäuse ist über einem optisch transparenten Kleber und/oder Klebeband mit der Seitenkante der unteren Scheibe verbunden.

Ein Reflektor ist bevorzugt zwischen dem zum LED-Gehäuse benachbarten Verbindungselement und der unteren Scheibe angeordnet. Der Reflektor umfasst helle Farbanstriche, beispielsweise Keramikfarbe und helle Polymer- oder Metallkörper. Der Reflektor vermeidet oder verringert einen Lichtverlust im Bereich der Verbindungselemente.

Die Verbundglasscheibe umfasst weiterhin eine obere Scheibe, eine Klebeschicht und eine mittlere Scheibe. Die Klebeschicht enthält bevorzugt PVB (Polyvinylbutyral) und/oder EVA (Poly-Ethylvinylacetat). Die Klebeschicht enthält optional eine Polyesterfolie, bevorzugt Polybutylenterephthalat (PBT), Polycarbonat (PC), Polyethylenterephthalat (PET) und Polyethylennaphthalat (PEN) und/oder Gemische und/oder Copolymere davon. Die Klebeschicht kann mehrere Schichten gleicher oder unterschiedlicher Polymere enthalten. Die Verbundglasscheibe und/oder die mittlere Scheibe weisen bevorzugt eine Wärmeschutzbeschichtung auf. Die Wärmeschutzbeschichtung enthält bevorzugt Silber.

Die Isolierverglasung weist bevorzugt eine optische Transparenz von > 60 %, bevorzugt von > 75 %, besonders bevorzugt von > 85 % auf. Der Ausdruck "optische Transparenz" beschreibt im Sinne der Erfindung eine mittlere optische Transmission im Wellenlängenbereich von 400 nm bis 800 nm (VIS-Bereich).

Die untere Scheibe enthält bevorzugt Leuchtfelder. Die Leuchtfelder reflektieren, emittieren oder streuen das von den LEDs in die obere Scheibe eingekoppelte Licht nach außen. Sind nur einzelne Leuchtfelder auf oder in der unteren Scheibe angeordnet, so leuchtet die Scheibe nur im Bereich der Leuchtfelder. Ist die gesamte Abstrahlfläche der unteren Scheibe mit Reflektoren versehen, so leuchtet entsprechend auf der entgegengesetzten Seite die gesamte untere Scheibe.

Die Leuchtfelder umfassen bevorzugt Strukturen zur Lichtstreuung, besonders bevorzugt Partikel, Punktraster, geätzte Oberflächen, Aufkleber, Anlagerungen, Einkerbungen, Einritzungen, Strichraster, Aufdrucke und/oder Siebdrucke.

Die Ummantelung enthält bevorzugt ein optisch transparentes Polymer, besonders bevorzugt Polyurethane, Silikone, Polyisoprene, Styrol-Butadien-Kautschuk, Butadien-Acrylnitril-Kautschuk und/oder Polyacrylate sowie Gemische und/oder Copolymere davon.

Die Silikone enthalten bevorzugt RTV(raumtemperturvernetzenden)-Silikonkautschuk, HTV-(hochtemperturvernetzenden) Silikonkautschuk, peroxidischvernetzten-Silikonkautschuk und/oder additionsvernetzten-Silikonkautschuk sowie Gemische und/oder Copolymere davon. Das LED-Gehäuse ist bevorzugt mit einem optisch transparenten Kleber und/oder Klebeband an der Seitenkante der unteren Scheibe befestigt. Die Wahl des Klebstoffes auf dem Klebeband richtet sich dabei nach dem Material der Scheibe oder der Ummantelung. Das optisch transparente Klebeband enthält bevorzugt auf der der Ummantelung zugewandten Seite einen Klebstoff auf Silikonbasis und auf der der Scheibe zugewandten Seite einen Klebstoff auf Acrylatbasis. So lässt sich beispielsweise eine Ummantelung aus Silikon mit einer Scheibe aus Glas oder Polyacryl fest verbinden. Das optisch transparente Klebeband wird bevorzugt durch eine Koronaentladung aktiviert.

Das LED-Gehäuse ist bevorzugt nichttragend mit der unteren Scheibe verbunden. Der Ausdruck "nichttragend" bedeutet im Sinne der Erfindung, dass das LED-Gehäuse nicht im direkten Kontakt mit den möglichen Haltevorrichtungen der beleuchteten Dreifachverglasung steht. Das LED-Gehäuse ist bevorzugt Teil der nichttragenden Konstruktion und trägt somit nicht selbst zur Stabilität bei. Diese nichttragende Montage ermöglicht ein einfaches Auswechseln und Warten des LED-Gehäuses.

Ein optisch transparente Kleber und/oder Klebeband enthält bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe sowie Gemische und/oder Copolymere davon.

Ein optisch transparenter Kleber und/oder Klebeband weist bevorzugt eine optische Transparenz von > 80 %, besonders bevorzugt > 90 %, auf.

Die LEDs weisen bevorzugt einen Abstand zu der oberen Scheibe von < 1 mm, bevorzugt < 0,5 mm, auf.

Die LED-Leiterplatte enthält bevorzugt Silber, Kupfer, Zinn, Nickel, Gold, Aluminium, Eisen, Wolfram, Chrom und/oder Legierungen davon und/oder ein elektrisch leitfähiges Klebeband.

Die Verbindungselemente weisen bevorzugt eine Breite von 5 mm bis 20 mm und eine Höhe von 5mm bis 10 mm auf. Die Höhe wird entlang der zur Verbundglasscheibe und/oder unteren Scheibe hin weisenden Kante des Verbindungselements bestimmt. Die Breite ergibt sich entlang der Kante zum Zwischenraum zwischen Verbundglasscheibe und unteren Scheibe. Die Verbindungselemente sind bevorzugt block- oder quaderförmig ausgebildet. Die Verbindungselemente enthalten bevorzugt Polymere und/oder Metalle.

Das LED-Gehäuse weist bevorzugt eine Aussparung für ein Kabel auf. Die Aussparung ermöglicht die platzsparende Anordnung mehrere LED-Gehäuse oder LED-Leisten in einer Reihe an einer längeren Glasscheibe. Zudem ist mit der Kabelführung durch die Aussparung in der Ummantelung kein zusätzlicher Platz notwendig.Das LED-Gehäuse weist bevorzugt eine Bauhöhe kleiner 10 mm, bevorzugt kleiner 8 mm auf. In einer Fassadenkonstruktion ermöglicht dies eine sehr kompakte Bauweise.

Die Erfindung betrifft eine beleuchtete Fassadenanordnung, wobei zwei oben beschriebene, beleuchtete Dreifachverglasungen über Befestigungseinheiten mit einer Fassadenhalterung verbunden sind. Eine Abdeckung ist an den der Fassadenseite abgewandten Seiten der Isolierverglasungen zwischen den einzelnen Isolierverglasungen befestigt. Die Stromversorgung des LED-Gehäuses innerhalb der erfindungsgemäßen beleuchteten Isolierverglasung erfolgt über ein Kabel vom LED-Gehäuse zu einer (Haupt-)Stromzuführung innerhalb der Abdeckung. Die bevorzugt abnehmbare Abdeckung ermöglicht ein einfaches Auswechseln des LED-Gehäuses.

Ein Verfahren zur Herstellung einer beleuchteten Scheibenanordnung umfasst einen ersten Schritt, bei dem eine obere Scheibe über eine Klebeschicht mit einer mittleren Scheibe im Autoklaven verbunden wird. Anschließend oder parallel wird mindestens eine LED an einer LED-Leiterplatte und ein elektrischer Anschluss zu einer LED-Anordnung verbunden. Im nächsten Schritt wird die erhaltene Anordnung mit einer Ummantelung versehen und ein LED-Gehäuse erhalten. Anschließend, im Vorfeld oder parallel werden die mittlere Scheibe und eine untere Scheibe über ein umlaufendes Verbindungselement verbunden. Die Verbindungselemente werden bevorzugt noch mit Dichtungen, beispielsweise auf Silikonbasis versiegelt. Im abschließenden Schritt wird das LED-Gehäuse an der Seitenkante oder am Rand der unteren Scheibe über einen optisch transparenten Kleber und/oder Klebeband befestigt.

Offenbart ist auch die Verwendung der beleuchteten Scheibenanordnung als beleuchtete Außenfassade, Gebäudeinnenbeleuchtung, Gebäudeaußenbeleuchtung, Werbeträger und/oder Fahrzeug scheibe.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.
Figur 1 zeigt einen Querschnitt einer beleuchteten Dreifachverglasung (I),
Figur 2 zeigt einen Querschnitt einer beleuchteten Fassadenanordnung (II),
Figur 3 zeigt einen weiteren, schematischen, detaillierten Querschnitt der beleuchteten Fassadenanordnung (II),
Figur 4 zeigt ein Fließschema eines Verfahrens zur Herstellung einer beleuchteten Scheibenanordnung und
Figur 5 einen Querschnitt einer bevorzugten Ausführungsform des LED-Gehäuses.

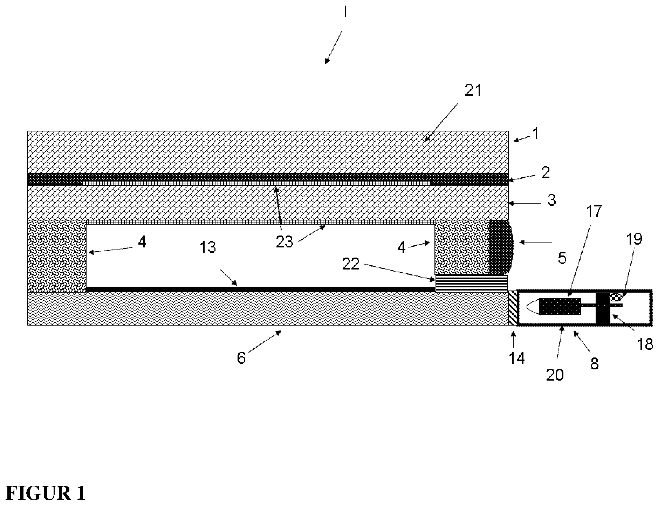

Figur 1 zeigt einen Querschnitt der beleuchteten Scheibenanordnung I, bestehend aus einer Dreifachverglasung. Eine obere Scheibe 1 ist über eine Klebeschicht 2 mit einer mittleren Scheibe 3 zu einer Verbundglasscheibe 21 verbunden. Die mittlere Scheibe 3 ist über ein umlaufendes Verbindungselement 4 und eine Dichtung 5 mit einer unteren Scheibe 6 befestigt. Die Dichtung 5 enthält bevorzugt ein helles, lichtreflektierendes Material. Ein LED-Gehäuse 8 wird über einen optisch transparenten Kleber 14 mit der Seitenkante der unteren Scheibe 6 verbunden. Der Ausdruck "Seitenkante" oder "Rand" beschreibt im Sinne der Erfindung bevorzugt die kleinere Außenkante, senkrecht zur Durchsichtseite der unteren Scheibe. Ein elektrischer Anschluss 19 versorgt die LEDs 17 mit Strom. Eine Ummantelung 20 aus transparentem Polyurethan oder Silikon bildet den äußeren Rahmen des LED-Gehäuses 8. Auf der unteren Scheibe befinden sich aufgedruckte Leuchtfelder 13, welche das vom LED-Gehäuse 8 eingestrahlte Licht aus der unteren Scheibe 6 nach außen koppeln.

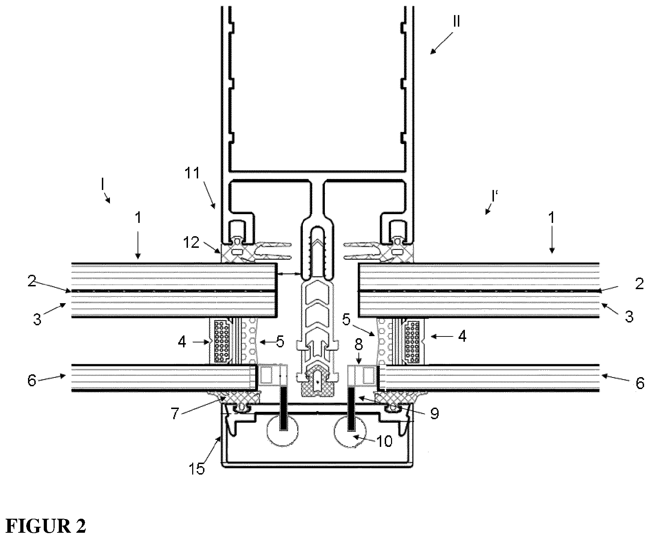

Figur 2 zeigt einen Querschnitt der beleuchteten Fassadenanordnung II. Über eine Fassadenhalterung 11 und daran verankerte Befestigungseinheiten 12 wird die Scheibenanordnung I befestigt. Der Aufbau der Scheibenanordnungen I entspricht der in Figur 1 gezeigten Anordnung. Das LED-Gehäuse 8 wird über ein Kabel 9 aus dem Hauptkabel 10 mit Strom versorgt. Das Hauptkabel 10 liegt innerhalb einer über äußere Befestigungselemente 7 verbundenen, abnehmbaren Abdeckung 15. Das LED-Gehäuse 8, Kabel 9 und Hauptkabel 10 können durch Abnehmen der Abdeckung 15 leicht ausgetauscht und gewartet werden.

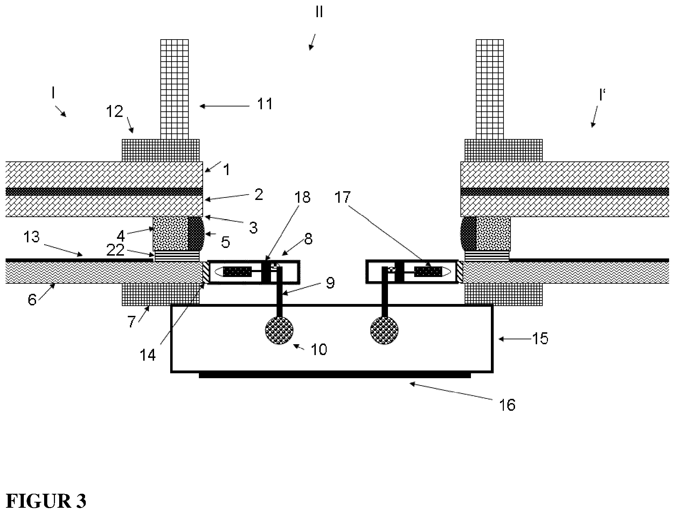

Figur 3 zeigt einen vergrößerten, schematischen Querschnitt der beleuchteten Fassadenanordnung. Der Aufbau entspricht dem in Figur 1 und 2 beschriebenen. Die Abdeckung kann optional verschiedene reversibel wieder verschließbare Öffnungen 16 aufweisen.

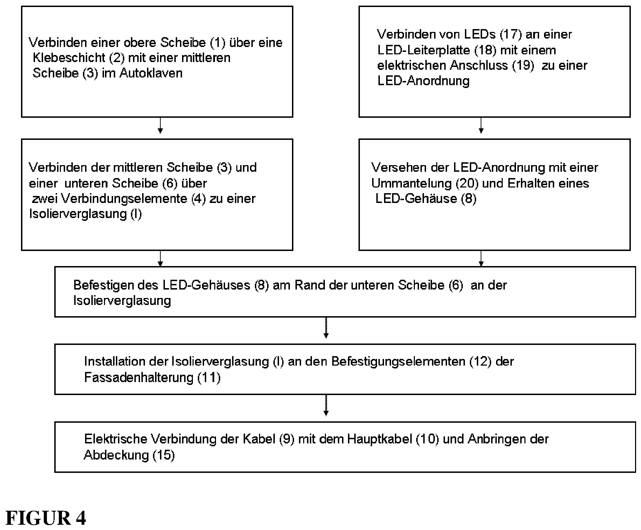

Figur 4 zeigt ein Fließdiagramm zur Herstellung der beleuchteten Scheibenanordnung I. In einem ersten Schritt wird eine obere Scheibe 1 über eine Klebeschicht 2 mit einer mittleren Scheibe 3 im Autoklaven verbunden. Parallel oder anschließend werden LEDs 17 an einer LED-Leiterplatte 18 und ein elektrischer Anschluss 19 zu einer LED-Anordnung verbunden. Im nächsten Schritt wird die erhaltene Anordnung mit einer Ummantelung 20 versehen und ein LED-Gehäuse 8 erhalten. Anschließend werden die mittlere Scheibe 3 und eine untere Scheibe 6 über ein umlaufendes Verbindungselement 4 zu einer Isolierverglasung I verbunden. Im folgenden Schritt wird das LED-Gehäuse 8 am Rand der unteren Scheibe 6 über einen optisch transparenten Kleber und/oder Klebeband 14 befestigt. Die Befestigung des LED-Gehäuses 8 an der Seitenkante oder am Rand der unteren Scheibe 6 verhindert einen Beitrag des LED-Gehäuses 8 zur Tragfähigkeit der Isolierverglasung I. Dies bedeutet, dass das LED-Gehäuse 8 in einer Fassadenanordnung ausgetauscht werden kann, ohne dass tragende Elemente wie beispielsweise die Befestigungseinheiten 12 beeinflusst oder gar beeinträchtigt werden. Anschließend wird die Isolierverglasung I an den Befestigungselementen 12 der Fassadenhalterung 11 befestigt. Abschließend erfolgt das elektrische Verbinden der Kabel 9 mit dem Hauptkabel 10 und das Anbringen der Abdeckung 15.

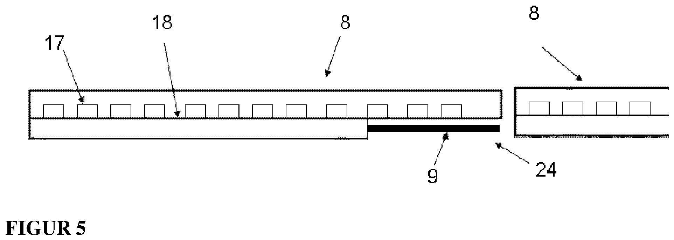

Figur 5 einen Querschnitt einer bevorzugten Ausführungsform des LED-Gehäuses 8. Das LED-Gehäuse 8 weist eine Aussparung 24 zur platzsparenden Anordnung des Kabels 9 auf. Die Aussparung weist bevorzugt eine Länge entsprechend 2 % bis 10 % der Gesamtlänge des LED-Gehäuses 8 auf. Die Aussparung ermöglicht des Weiteren die direkte Anordnung mehrerer LED-Gehäuse 8 entlang der Seitenkante der unteren Scheibe 6.

Die erfindungsgemäße Fassadenanordnung erlaubt die Wartung der LEDs ohne dass die Verglasung umgebaut werden muss. Die erfindungsgemäße Anordnung ist sehr wirtschaftlich in der Herstellung und vorteilhaft in der Wartung. Das war für den Fachmann unerwartet und überraschend.

### Bezugszeichenliste:

- 1: obere Scheibe
- 2: Klebeschicht
- 3: mittlere Scheibe
- 4: umlaufendes Verbindungselement (Spacer)
- 5: Dichtung
- 6: untere Scheibe/Außenscheibe
- 7: äußere Befestigungselemente
- 8: LED-Gehäuse
- 9: Kabel/Anschlusskabel
- 10: Hauptkabel
- 11: Fassadenhalterung
- 12: Befestigungselement
- 13: Leuchtfelder
- 14: optisch transparenter Kleber und/oder Klebeband
- 15: Abdeckung
- 16: Öffnung
- 17: LED
- 18: LED-Leiterplatte
- 19: elektrischer Anschluss (LED)
- 20: Ummantelung
- 21: Verbundglasscheibe
- 22: Reflektor
- 23: Wärmeschutzbeschichtung
- 24: Aussparung
- I, I': Scheibenanordnung
- II: Fassadenanordnung

## Patentansprüche

1. Beleuchtete Fassadenanordnung, umfassend zwei über Befestigungseinheiten (12) mit einer Fassadenhalterung (11) verbundene Isolierverglasungen (I, I') und eine an der der Fassadenseite abgewandten Seite der Isolierverglasungen (I, I') zwischen den Isolierverglasungen (I, I') befestigte Abdeckung (15), wobei eine Stromversorgung des LED-Gehäuses (8) über ein Kabel (9) zu einer Stromzuführung im Hauptkabel (10) innerhalb der Abdeckung (15) erfolgt, wobei die Isolierverglasungen (I, I') jeweils umfassen:
- eine Verbundglasscheibe (21), wobei die Verbundglasscheibe (21) eine erste Scheibe (1), eine Klebeschicht (2) und eine zweite Scheibe (3) umfasst,
- mindestens ein umlaufendes Verbindungselement (4) zwischen der Verbundglasscheibe (21) und einer Außen-Scheibe (6) und
- ein an der Seitenkante der Außen-Scheibe (6) befestigtes LED-Gehäuse (8), umfassend eine LED (17), eine an der LED (17) befestigte LED-Leiterplatte (18), einen an der LED-Leiterplatte (18) befestigten elektrischen Anschluss (19), eine Ummantelung (20) der LED (17), LED-Leiterplatte (18) und des elektrischen Anschlusses (19), wobei
- das LED-Gehäuse (8) über einen optisch transparenten Kleber und/oder Klebeband (14) mit der Seitenkante der Außen- Scheibe (6) verbunden ist.

2. Fassadenanordnung nach Anspruch 1, wobei ein Reflektor (22) zwischen dem zum LED-Gehäuse (8) benachbarten Verbindungselement (4) und der Außen-Scheibe (6) angeordnet ist.

3. Fassadenanordnung nach Anspruch 1 oder 2, wobei die Verbundglasscheibe (21) eine Wärmeschutzbeschichtung (23) aufweist.

4. Fassadenanordnung nach einem der Ansprüche 1 bis 3, wobei die Isolierverglasung (I) eine optische Transparenz von > 60 %, bevorzugt > 75 % und besonders bevorzugt > 85 % aufweist.

5. Fassadenanordnung nach einem der Ansprüche 1 bis 4, wobei die Außen-Scheibe (6) Leuchtfelder (13), bevorzugt Partikel, Punktraster, Strichraster, Aufkleber, Anlagerungen, Einkerbungen, Siebdrucke, Einritzungen und/oder Kombinationen davon enthält.

6. Fassadenanordnung nach einem der Ansprüche 1 bis 5, wobei die Ummantelung (20) ein Metall, bevorzugt Aluminium, Titan, Eisen, Chrom, Nickel, Wolfram und/oder Legierungen enthält.

7. Fassadenanordnung nach einem der Ansprüche 1 bis 6, wobei die Ummantelung (20) ein Polymer, bevorzugt Polyurethane, Silikone, Polyisoprene, Styrol-Butadien-Kautschuk, Butadien-Acrylnitril-Kautschuk und/oder Polyacrylate sowie Gemische und/oder Copolymere davon enthält.

8. Fassadenanordnung nach Anspruch 7, wobei die Silikone RTV-Silikonkautschuk, HTV-Silikonkautschuk, peroxidischvernetzten Silikonkautschuk und/oder additionsvernetzten Silikonkautschuk sowie Gemische und/oder Copolymere davon enthalten.

9. Fassadenanordnung nach einem der Ansprüche 1 bis 8, wobei der optisch transparente Kleber und/oder Klebeband (14) Acrylatklebstoffe, Methylmethacrylatklebstoffe, Cyanacrylatklebstoffe, Polyepoxide, Silikonklebstoffe und/oder silanvernetzende Polymerklebstoffe, RTV-Silikonkautschuk, HTV-Silikonkautschuk, peroxidischvernetzten Silikonkautschuk und/oder additionsvernetzten Silikonkautschuk sowie Gemische und/oder Copolymere davon enthält.

10. Fassadenanordnung nach einem der Ansprüche 1 bis 9, wobei die Verbindungselemente (4) eine Breite von 5 mm bis 20 mm aufweisen.

11. Fassadenanordnung nach einem der Ansprüche 1 bis 10, wobei der optisch transparente Kleber und/oder Klebeband (14) eine optische Transparenz von > 80 %, bevorzugt > 90 % aufweisen.

12. Fassadenanordnung nach einem der Ansprüche 1 bis 11, wobei das LED-Gehäuse (8) eine Aussparung (24) für ein Kabel (9) aufweist.

## Claims

1. Illuminated façade arrangement, comprising two insulating glazings (I, I') connected via fastening units (12) to a façade mount (11) and a cover (15) fastened between the insulating glazings (I, I') on the side of the insulating glazings (I, I') turned away from the façade side, wherein a supplying of power to the LED housing (8) takes place via a cable (9) to a power feed in the main cable (10) inside the cover (15), wherein the insulating glazings (I, I') respectively comprise:
- a composite glass pane (21), wherein the composite glass pane (21) comprises a first pane (1), an adhesive layer (2) and a second pane (3),
- at least one circumferential connection element (4) between the composite glass pane (21) and an outer pane (6), and
- an LED housing (8) fastened to the side edge of the outer pane (6) comprising at least an LED (17), an LED printed circuit board (18) fastened to the LED (17), an electrical connector (19) fastened to the LED printed circuit board (18), a sheathing (20) of the LED (17), LED printed circuit board (18), and the electrical connector (19), wherein
- the LED housing (8) is connected to the side edge of the outer pane (6) via an optically transparent adhesive and/or adhesive tape (14).

2. Façade arrangement according to claim 1, wherein a reflector (22) is disposed between the connection element (4) adjacent the LED housing (8) and the outer pane.

3. Façade arrangement according to claim 1 or 2, wherein the composite glass pane (21) has a thermal protection coating (23).

4. Façade arrangement according to one of claims 1 through 3, wherein the insulating glazing (I) has an optical transparency of > 60 %, preferably > 75 %, and particularly preferably > 85 %.

5. Façade arrangement according to one of claims 1 through 4, wherein the outer pane (6) contains luminous fields (13), preferably particles, dot patterns, line patterns, stickers, deposits, indentations, screen prints, incisions, and/or combinations thereof.

6. Façade arrangement according to one of claims 1 through 5, wherein the sheathing (20) contains a metal, preferably aluminum, titanium, iron, chromium, nickel, tungsten, and/or alloys.

7. Façade arrangement according to one of claims 1 through 6, wherein the sheathing (20) contains a polymer, preferably polyurethanes, silicones, polyisoprenes, styrenebutadiene rubber, butadiene-acrylonitrile rubber, and/or polyacrylates as well as mixtures and/or copolymers thereof.

8. Façade arrangement according to claim 7, wherein the silicones include RTV silicone rubber, HTV silicone rubber, peroxide vulcanizing silicone rubber, and/or addition vulcanizing silicone rubber, as well as mixtures and/or copolymers thereof.

9. Façade arrangement according to one of claims 1 through 8, wherein the optically transparent adhesive and/or adhesive tape (14) contains acrylate adhesives, methyl methacrylate adhesives, cyanoacrylate adhesives, polyepoxides, silicone adhesives, and/or silane cross-linking polymer adhesives, RTV silicone rubber, HTV silicone rubber, peroxide vulcanizing silicone rubber, and/or addition vulcanizing silicone rubber, as well as mixtures and/or copolymers thereof.

10. Façade arrangement according to one of claims 1 through 9, wherein the connection elements (4) have a width of 5 mm to 20 mm.

11. Façade arrangement according to one of claims 1 through 10, wherein the optically transparent adhesive and/or adhesive tape (14) have an optical transparency of > 80 %, preferably > 90 %.

12. Façade arrangement according to one of claims 1 through 11, wherein the LED housing (8) has a recess (24) for a cable (9).

## Revendications

1. Disposition de façade illuminée comprenant deux vitrages isolants (I, I') associés à un support de façade (11) par deux unités de fixation (12) et un couvercle (15) fixé entre les vitrages isolants (I, I') sur la face détournée des vitrages isolants (I, I')) entre le double vitrage ((I, I'), où une alimentation électrique du boîtier de LED (8) se produit par un câble (9) à une arrivée de courant d'approvisionnement dans le câble principal (10) à l'intérieur du couvercle (15), où les vitrages isolants (I, I') comprennent chacun :
- une plaque de verre feuilleté (21), où le verre feuilleté (21) comprend une première vitre (1), une couche adhésive (2) et une deuxième vitre (3),
- au moins un élément de connexion (4) sur tout le pourtour entre la plaque de verre feuilleté (21) et une vitre extérieure (6) et
- un boîtier de LED (8) fixé sur le bord latéral d'une vitre extérieure (6), comprenant une LED (17), un circuit imprimé de LED (18) attaché à la LED (17), un raccordement électrique (19) attaché au circuit imprimé de LED (18), une gaine (20) de la LED (17), du circuit imprimé de LED (18) et des raccordements électriques (19) où
- le boîtier de LED (8) est reliée au bord latéral de la vitre extérieure (6) par un adhésif optiquement transparent ou un ruban adhésif (14) avec le bord latéral de la vitre extérieure (6).

2. Disposition de façade selon la revendication 1, où un réflecteur (22) est disposé entre l'élément de connexion (4) adjacent au boîtier de LED (8) et la vitre extérieure (6).

3. Disposition de façade selon l'une des revendications 1 ou 2, où la plaque de verre feuilleté (21) présente un revêtement de protection thermique (23).

4. Disposition de façade selon l'une des revendications 1 à 3, où le vitrage isolant (I) présente une transparence optique de >60%, de préférence >75% et de façon particulièrement préférée >85%.

5. Disposition de façade selon une des revendications 1 à 4, où la vitre extérieure (6) contient des champs lumineux (13) de préférence des particules, grilles de points, grilles de lignes, autocollants, accumulations, encoches, sérigraphies, rainures et/ou leurs combinaisons.

6. Disposition de façade selon l'une des revendications 1 à 5, où la gaine (20) contient un métal, de préférence de l'aluminium, du titane, du fer, du chrome, du nickel, du tungstène ou des alliages.

7. Disposition de façade selon l'une des revendications 1 à 6, où la gaine (20) contient un polymère, de préférence des polyuréthanes, des silicones, des polyisoprènes, du caoutchouc butadiène-styrène, du caoutchouc acrylonitrile-butadiène et/ou des polyacrylates ainsi que leurs mélanges et/où copolymères.

8. Disposition de façade selon la revendication 7, où les silicones contiennent du caoutchouc de silicone RTV, du caoutchouc de silicone HTV, du caoutchouc de silicone réticulé au peroxyde et/ou du caoutchouc réticulé par addition de silicone ainsi que leurs mélanges et/où copolymères.

9. Disposition de façade selon l'une des revendications 1 à 8, où l'adhésif optiquement transparente ou le ruban adhésif (14) contient des colles acryliques, des colles méthacrylates de méthyl, des colles cyanoacrylates, des polyépoxydes, des adhésifs de silicone et/ou des adhésifs de polymères réticulés de silane, du caoutchouc de silicone RTV, du caoutchouc de silicone HTV, du caoutchouc de silicone réticulé au peroxyde et/ou du caoutchouc réticulé par addition de silicone ainsi que leurs mélanges et/où copolymères.

10. Disposition de la façade selon l'une des revendications 1 à 9, où les éléments de fixation (4) ont une largeur de 5 mm à 20 mm.

11. Disposition de façade selon l'une des revendications 1 à 10, où l'adhésif optiquement transparente ou ruban adhésif (14) présentent une transparence optique de >80%, de préférence de >90%.

12. Disposition de façade selon l'une des revendications 1 à 11, où le boîtier de LED (8) présente un évidement (24) pour un câble (9).
